# EUROPEAN PATENT SPECIFICATION

(11) **EP 4 377 365 B1**
(45) Date of publication and mention of the grant of the patent: **03.09.2025**
(21) Application number: 22754529.0
(22) Date of filing: 26.07.2022
(51) Int. Cl.: C08F 2/48, C08F 251/02, C09D 4/06, C09D 5/00, G09F 3/10

(54) **PRIMER COMPOSITION FOR A FLEXOGRAPHIC PRINTING LABEL**
PRIMERZUSAMMENSETZUNG FÜR EIN FLEXOGRAPHISCHES DRUCKETIKETT
COMPOSITION D'APPRÊT POUR UNE ÉTIQUETTE D'IMPRESSION FLEXOGRAPHIQUE

(30) Priority: 28.07.2021 US 202163226258 P; 13.08.2021 NL 2028972
(43) Date of publication of application: 05.06.2024
(73) Proprietor: Flint Group, LLC, North Saint Paul, Minnesota 55117 (US)
(72) Inventor: VIEIRA DA SILVA, Paulo Roberto, Rogers, Minnesota 55374 (US); HEYLEN, Marc Jacob, 3000 Leuven (BE); PRICE, Christopher John, Bristol, South Gloucestershire BS30 5JS (GB); REICHERT, Malinda Denise, Oak Grove, Minnesota 55011 (US); STEBBINS, Matthew Thomas, Hudson, Wisconsin 54016 (US)
(74) Representative: Arnold & Siedsma
(86) International application number: PCT/IB2022/056890
(87) International publication number: WO 2023/007370

(56) References cited:
- EP-A1- 2 426 176
- WO-A1-2018/085039

## Description

The present invention relates to the technical field of labels used in the packaging industry, more in particular the invention relates to the recyclability of printing labels. Even more in particular, the invention relates to the recyclability of heat shrinking labels such as heat shrinking sleeves.

### BACKGROUND

In recent years the sustainability trend has been growing in the packaging industry. Several initiatives are being researched in order to follow this trend. One of these initiatives is to recycle packaging materials such that they can be re-used. To this end, it is desired to recycle not only the material of the containers but also the material of the labels. However, multiple challenges have occurred when recycling label materials.

A first challenge is the separation of materials, namely the separation of the material of the containers (e.g PET, PE, PVC) from the label materials. One way to solve this is to use the same kind of materials for both the label material as for the container, however this has the disadvantage that the application freedom of the label is limited. An example of such a limitation is that the thermoforming properties of the label material is restricted to the thermoforming properties of the container thereby typically excluding the use as heat shrinking label.

A second challenge is the presence of contaminants which decrease the purity of the recycled materials. One of these contaminants is the ink which even after substantive washing steps may still remain on the printing label and decrease the quality of the recycled label material making it less suitable for re-use. One way to solve this is to include de-inking properties such that the ink can be easily separated from the label material. However, de-inking properties may also limit the application freedom and/or may decrease the functional use of the label, namely the ink may start to flow out when the labels are being applied on or around a container or when the labels are being transported, stored or used by consumers.

Hence, it is an object of the invention to follow the sustainability trend of the industry and to improve the recyclability of the printing labels. More in particular, it is an object of the invention to provide a label, preferably a label having heat shrinking properties, that can be recycled in an improved manner while at the same time has fitting label application attributes and long lasting functional use properties such as a long term and high quality print. WO2018/085039 relates to a digital printing process that applies a liquid radiation curable primer containing 20 to 80% of at least one acrylate functional monomer and 20 to 60% of at least one thermoplastic polyurethane polymer onto a surface of a flat web or sheet substrate; cures the primer by UV or EB irradiation to give a dry, tack-free surface.
EP2426176A1 relates to a 100% solids energy curable liquid primer coating for use on a variety of substrates which cures to form a coating that provides good ink adhesion and high print quality when printed using an electrophotographic printing device.

### SUMMARY OF THE INVENTION

To this end, the invention provides a primer composition according to claim 1. More in particular, the invention provides a primer composition for a flexographic printing label wherein said primer composition comprises at least the following components of which the wt% percentages are expressed as based on the total weight of the primer composition: one or more a radiation curable monomers (c1), monofunctional or difunctional; a photoinitiator (p1) present in a range of 0 - 20 wt%; wherein the primer composition has an acid value of 50 - 135 mg KOH/g , more preferably 60 - 120 mg KOH/g and wherein the primer composition further comprises:
a cellulosic polymer (c2) present in a range of 2 - 12 wt%, more preferably 4 - 10 wt%, an acid-functional radiation curable monomer (c3) present in a range of 25 - 60 wt% and having an acid value of more than 240 mg KOH/g, preferably between 240 - 270 mg KOH/g, a multifunctional radiation curable monomer (c4) with an acrylate functionality of at least 3, preferably at least 4, more preferably at least 5, most preferably 6.

The invention is based on the understanding that by placing the primer composition between the ink and the label, one can provide an optimal balance between ink attachment properties and ink detachment properties. Decent ink attachment is important for the functional use of the label, namely, such that the print quality of the ink on the label is ensured and long lasting. Even during harsh conditions, such as high temperatures, humidity and mechanical impacts which may occur during label application procedures such as heat shrinking, transport, storage or during consumer use. Further, the ink detachment properties deliver recyclability attributes of the label. Namely, the ink can be separated from the label material more easily such that the label material can be recycled with less ink contamination.

Indeed, the acid functional radiation curable monomer (c3) having an acid value of more than 240 mg KOH/g brings suitable acid features to the primer composition such that hydrolysis readily occurs upon contact with an alkaline solution. By having an acid functional radiation curable monomer, a primer composition with an acid value of 50 - 135 mg KOH/g , more preferably 60 - 120 mg KOH/g can be made which has the benefit that ink can be washed off with standard alkaline washing solutions and while at the same time the functional use of the label is not lowered. Namely, enough resistance can still be achieved, e.g resistance to humid conductions during transport and storage of the labels.

The one or more radiation curable monomers (c1) and the photo initiator (p1) aid in the formation of a well cured network upon radiation exposure. In this way, the primer composition can form a stable layer and can sufficiently adhere to a substrate such as the label. The radiation curable property of the acid functional radiation curable monomer (3) cause an inclusion of the acid functionality into the cured network of the primer composition upon radiation exposure. In this way the cured network may achieve a suitable internal cohesion such that the cured primer coating may disassemble and disperse into an aqueous alkaline washing solution. Furthermore, the inclusion of the acid functional radiation curable monomer into the cured network causes long lasting wash-off capabilities.

In order to improve the cured network of primer composition components, a multifunctional radiation curable monomer (c4) with an acrylate functionality of at least 3, preferably at least 4, more preferably at least 5, most preferably 6 has been included into the composition. It has been found that by making the combination with at least a multifunctional radiation curable monomer and good adhesion properties can be achieved. In this way, the primer composition can attach greatly to a substrate, e.g the surface of the label e.g a PET-g film, and achieves a high receptivity to ink. In this way, the functional use of a label may be improved since the anchoring of the ink to the surface of the primer layer formed by the primer composition can be improved such that the ink may remain on the surface of the label. This property can be tested with tape-off ink removal tests. Further, a well cured network causes a dry surface of primer composition such that high CMYK printing qualities can be achieved. The one or more radiation curable monomers (c1) may have an acid value lower than 240 mg KOH/g. Thus, distinguishable from the acid-functional radiation curable monomer (c3) having an acid value of more than 240 mg KOH/g. The one or more radiation curable monomers (c1) are monofunctional or difunctional, more preferably the radiation curable monomers (c1) may have an mono or di acrylate functionality or with other words, the radiation curable monomers (c1) may have an average acrylate functionality equal to n, wherein n = 1-2.

The inventors have found that, in particular in the field of heat shrinking labels, the primer composition should be able to not only follow the dimensional changes of the shrinking labels during thermoforming but should also be able to remain functional. Surprisingly, it has been found that by having a cellulosic polymer present in the composition of at least 2 wt%, preferably in a range of 2 - 12 wt%, more preferably 4 - 10 wt% desired flexibilities can be achieved. The inventors have further found that the cellulosic polymer enhances coating flexibility, substrate adhesion and water resistance. This has the benefit that the primer composition is able to form a primer layer on a heat shrink label which can remain functional, even after exposure to heat and thermoforming causing dimensional changes during the heat shrink application procedures.

It is preferred that at least one of the one or more radiation curable monomers (c1) has one or more of the following features: - an average molecular weight at least 150 g/mole, in particular between 150 - 800 g/mole; - an average acrylate functionality equal to n, wherein n = 1 - 2; By selecting the molecular weight as such, high reactivities may be achieved upon radiation exposure such that a well cured network may be achieved in due time and with relatively low doses of energy e.g doses of less than 30 mJ/cm². Further, by having the mentioned average acrylate functionality, the formation of the cured network is improved. Acquiring a well cured network further improves the capability of the primer composition to form a primer layer having desired properties, such as ink receptivity, coating flexibility, hot steam resistance, resistance to ink removal, substrate layer adhesion, inclusion and long lasting acid functionalities.

It is preferred that the primer composition comprises a first radiation curable monomer with an average acrylate functionality of 1 or 2 and a second radiation curable monomer with an average acrylate functionality of 2, 3 or 4. It has been found that by making the combination of said acrylate functionalities the properties of the cured network can be improved.

It is preferred that the multifunctional radiation curable monomer (c4) is selected from: dipentaerythritol hexaacrylate (DPHA), pentaerythritol triacrylate (PETIA), a mixture of tri- and tetra-acrylates with a high degree of acrylic unsaturation, or hexafunctional urethane acrylates.

It is preferred that wherein the multifunctional radiation curable monomer (c4) is present in a range between 0,1 - 15 wt%, preferably between 0,5 - 12,5 wt%, more preferably between 1,5 - 10 wt%, even more preferably between 2 - 9 wt%. By having the multifunctional radiation curable monomer present in these ranges, one can form a well cured network having desired flexibility thereby causing primer layers to be complaisance to the thermoforming of substrates, e.g PET-g films, on which they are applied.

It is preferred that the cellulosic polymer (c2) has a glass transition temperature between 80 - 90°C, wherein said glass transition temperature is measured by DSC. By selecting said glass transition temperature, the dimensional adaptability of the primer composition is improved. This has been found to be of great use in the field of heat shrinking labels.

It is preferred that the cellulosic polymer (c2) has a melting temperature of at least 110°C, preferably between 120 - 150°C. By selecting these melting temperatures, one can improve the resistance of the primer composition to harsh conditions such as high temperatures. In particular in the field of heat shrinking labels, high temperatures may occur during the shrinking of the label. Typically, the labels are thermoformed with steam such that the labels may shrink around a container. By including the cellulosic polymer which has a melting temperature of at least 110°C, steam resistance can be improved.

It is preferred that the cellulosic polymer (c2) has an average molecular weight (Mw) of at least 5,000g/mol, preferably between 10,000 - 20,000 g/mol; said weight average molecular weight is measured by GPC / SEC equipped with an SLS detector. The inclusion of said cellulosic polymers improves the mechanical performance and adaptability of the primer composition. In this way, the primer composition can follow the dimensional changes of a shrinking label upon thermal reformation.

It is preferred that the cellulosic polymer (c2) comprises one or more derivatives of cellulose, preferably an ester derivative and/or an ether derivative thereof.

It is preferred that the the ratio of the at least one cellulosic polymer (c2) to the at least one acid-functional radiation curable monomer (c3) is about 1:30 to about 1:6. The inventor has found that these ratios delivers an optimum balance between the de-inking property of the primer composition and the survivability of the primer composition upon a heat shrinking process. Indeed, in this way the composition may achieve adhesion ratings up to 5 when exposed to standard UV Hg vapor H-bulb at 1600 - 2100 mW/cm2 lamp intensity for 0.06 - 0.10 sec , and can have a good solubility in 1% NaOH alkaline aqueous solution, a good steam resistance, and may provides a print surface conducive to typical UV flexographic printing press conditions.

It is preferred that the photoinitiator (p1) is selected from the alpha-hydroxy ketone chemical family, such as Cyclohexylphenyl ketone (CPK) and benzildimethyl ketal (BDK) as these photoinitiators have been shown to enhance the formation of a well cured network. These photoinitiators are also preferred due their reactivity upon exposure to commercial LED light sources. It is to be understood that other energy sources can be used as well to aid in the formation of the cured network.

In a further aspect of the invention, there is provided a label (100) comprising at least the following layers: - a substrate layer (SL1), preferably having a density which is higher than 1,00 g/cm³ such that the label sinks in water; - a primer layer (PL2) comprising the primer composition having one or more of the features as described above; - optionally one or more ink layers (IL3).

By having such a label having the primer layer, the recyclability of the material of the substrate layer may be improved. Namely, the primer layer facilitates the separation of the one or more ink layers from the substrate layer. In this way, the recyclability of the materials used for the substrate layer can be increased.

Preferably the label has one or more of the following features: - the substrate layer (SL1) has a first surface and a second surface opposite of said first surface, and wherein the primer composition is applied as a primer layer on the second surface; wherein the label is a heat-shrink sleeve label designed to be sleeved around a package (P) and wherein the second surface is intended to be faced towards said package. Due to such a configuration both the primer layer and the optional one or more ink layers are protected from harsh conditions, e.g scratches by the substrate layer.

Preferably the label is a heat shrinking label. These labels have the benefit that they can be placed around a container and shrinked, thereby achieving great functional use. The label will remain on or around the container, even upon possible mechanical or chemical hindering external factors. An additional benefit is that there is no need for adhesives. Preferably the substrate layer has a maximum heat shrinkage value of about 60 - 80% and/or wherein the substrate layer (SL1) has an average thickness of about 25-75 µm. By having the heat shrinkage value to be at most between 60 - 80 % one enhances the chances of the primer layer to remain effective upon dimensional change of the substrate layer upon heat exposure. Preferably the heat shrinkage value of the substrate layer is between 5 - 65 %, preferably 10 - 60 %, more preferably between 15 - 55 %. These values have been found to achieve desired heat shrinking properties such that the label can be used as a shrinking label to be fully or partially wrapped around a container e.g. a bottle.

Of particular preference is that the the substrate layer (SL1) is a glycol-modified polyethylene terephthalate (PET-g) film. This material is of preference due to recyclability reasons. Traditional materials may cause problems such as clumping during standard recycle processes which have float sink tanks for material separation. The glycol-modified polyethylene terephthalate can solve this problem.

In a further aspect, there is provided a method for producing a flexographic printing label, comprising the steps of: - optionally, pre-treating the substrate, preferably by air plasma corona discharge treatment; - applying the primer composition having one or more of the features as described herein on the substrate layer (SL1) such that a primer layer (PL2) is formed thereon; - optionally applying one or more ink layers (IL3) on the primer layer.

The air plasma corona discharge treatment may cause improved surface conditions of the substrate layer such that the substrate layer is more receptive towards the primer composition. By applying the primer composition onto the substrate layer, one can produce a flexographic printing label having the benefits as described earlier herein.

It is preferred that the method further comprises the step of at least partially curing the primer layer such that the primer layer (PL2) attaches to the substrate layer (SL1); By utilizing a curing technique, one does not need to rely one water and/or solvent borne techniques which typically cause evaporation of volatile organic compounds which are rather harmful for the environment. In addition, by curing the primer layer one may achieved improved adhesion between the primer layer and the substrate layer. On top of that, by having the curing step, the acid functional radiation curable monomer is included into the cured network resulting in long lasting de-inking properties.

It is preferred that the method comprises the step of: - at least partially curing the primer layer with a first light source (LS1), before the one or more ink layers are applied; - optionally curing the one or more ink layers with a second light source (LS2). Curing the primer layer before the one or more ink layers are applied have the benefit that the ink receptibility of the primer layer is increased such that high CMYK print qualities can be achieved.

It is preferred that the applying of the primer composition is done such that at least 1 g/m², preferably at least 1,5 g/m², more preferably at least 2 g/m² of primer composition is applied on the substrate layer to form the primer layer thereon. By ensuring that the primer composition is applied as a primer layer with a minimum amount of primer composition to be at least 1 g/m² one can ensure the functionality of the primer composition.

It is preferred that the applying of the primer composition is done such that less than 6 g/m², preferably less than 5 g/m², more preferably equal or less than 4 g/m² of primer composition is applied on the substrate layer to form the primer layer thereon. In this way, one may achieve high production rates while the primer layer can be exposed properly causing a well cured network having one or more of the benefits as described above.

It is preferred that the primer composition is applied on the substrate layer (SL1) via continuous-web flexography. This technique has been found to be able to apply the primer compositions in careful and precise manner while still achieving high production rates of printing labels.

It is preferred that the substrate layer (SL1) has a first and second surface, wherein the primer composition is applied on the second surface of the substrate layer and wherein the one or more ink layers are applied on the primer layer.

It is preferred that the second surface of the substrate layer (SL1) is pre-treated by means of corona treatment such that said second surface has a wetting tension of about 42 to 48 dynes/cm. Such pre-treatment may lower the amounts of ink contaminants in the batches of recycled materials of the substrate layer. One of the reasons is that the primer composition may be applied in an improved manner. By designing the wetting tension to be about 42 to 48 dynes/cm one can cause a well spread primer composition such that the a film is formed which can act as a barrier between ink particles of the one or more ink layers and the substrate layer.

It is preferred that the primer layer is cured such that the primer layer achieves an adhesion rating of 3 or more, preferably 4 or more, even more preferably 5; wherein the adhesion rating is measured according to ASTM 3359.

### BRIEF DESCRIPTION OF DRAWINGS

Figure 1 shows a cross section of a container with a partially wrapped label.
Figure 2 shows an illustration of a method to produce a flexographic printing label.

### DETAILED DESCRIPTION

According to NAPCOR (National Association for PET Container Resources, 2019), "More than 1.8 billion pounds of recyclable PET are collected each year in the United States." Further, NAPCOR states, "Full-wrap shrink labels cannot be removed from containers by traditional prewash technology. Hence, separation of materials (e.g the material of containers such as PET and the materials of the label) during recycle processes are difficult. In particular when the labels sink in water along with the PET during processing and thereby creating contamination than can be acceptably removed during the conventional PET recycling process". The present invention as described herein can address these problems and improve the recyclability of the material of the substrate layers, e.g a PET-g film. Indeed, there is there is a need for an improved recyclability of the materials used in the packaging industry. Certainly within the shrink packaging industry there is a need to have a method for producing a flexographic UV-curable, alkali-strippable primer coating for recyclable PET-g labels which has excellent properties of label substrate adhesion, water-resistance and ink receptivity.

Flexography is a printing technology, see, for example, Flexography Principles and Practice, Foundation of Flexographic Technical Association, 1992. Sleeve label printers who serve the plastic bottled-beverage packaging segment, for example, require precise ranges of thermal properties for the PET-g film label substrate, such that the PET-g film is able to adequately maintain dimensional stability under typical heat and/or web-tension conditions for web conveyance through multiple print stations on a flexographic printing press. For example, the PET-g film typically cannot exceed 60 to 80% maximum heat shrinkage without causing severe web distortion on press, which results in excessive downtime, labor and off-quality label material costs. An optimum PET-g film thickness range for flexographic printing is typically about 25 to 75 µm.

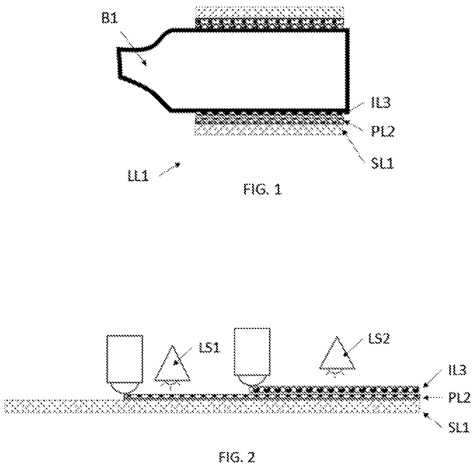

A method of producing a printing label is illustrated in figure 2. A substrate layer (SL1) is provided and the primer composition is applied thereon forming a primer layer (PL2). The primer layer may be cured with a first light source (LS1) before the ink layer (IL3) is applied. The substrate layer may be subjected to pre-treatments before said primer layer is applied. After the ink layer is applied, one may expose the ink layer with a second light source (LS2). The light sources may be used to radiate the primer layer and/or ink layer with the same wavelength or with a different wavelength. Typical wavelengths are 200 - 500 nm, more preferred wavelengths are 240 - 400 nm, more preferably about 246 nm or about 280 nm.

In this way, one may achieve great anchoring between the primer layer and the ink particles of the ink layer (IL3). The primer composition according to the invention causes the ink particles to be encapsulated so that they may form a precipitate during standard recycle processes. Such encapsulation has the benefit that the ink particles can be separated easily from the materials to be re-used e.g the substrate layer (SL1) e.g a PET-g film and/or the material of the container (B1) e.g PE, PP, PVC, PET.

The substrate layers, preferably PET-g films, are preferably second surface printed, also called reference printed, meaning the graphics display is usually viewed through the clear PET-g film. In this way, the substrate layer (SL1) of the label (LL1) may protect the primer layer (PL2) and the ink layer (IL3) since the latter two are faced towards the container (B1), see for example figure 1.

It is preferred to enhance the wetting tension of the PET-g film print surface by exposing the film to a corona discharge plasma, in tandem. For example, a wetting tension of about 42 - 48 Dynes/cm can be achieved when applying corona pre-treatment, in-line, on a typical flexographic printing press.

A de-inkable, UV-curable primer coating is described herein, to be applied by means of UV flexography, preferably directly onto a crystallizable PET-g film substrate, which is receptive to coloured printing ink layers, and has good adhesion to the PET-g substrate, and good bonding to the coloured printing ink layers, and good steam resistance upon exposure to hot steam-shrink tunnel conditions encountered in most commercial shrink package converting facilities, and the printing ink layers are removed by dissolution of the primer layer upon exposure to standard recycling hot caustic wash conditions.

For a primer coating on crystallizable PET-g film to effectively dissolve upon exposure to standard 1.0 wt% NaOH caustic wash solution, it should possess two fundamental chemical properties: 1) Sufficiently high acid number, such that hydrolysis reaction readily occurs when the cured primer coating comes in direct contact with aqueous alkali solution, and
2) Sufficiently low internal cohesion such that, upon hydrolysis, the cured primer coating readily absorbs water, disassembles, and then self-disperses into aqueous alkaline solution, and completely detaches from the PET-g film substrate altogether under minimal agitation.

The acid value can be measured by using standards methods measuring and/or expressing thereby the mass of potassium hydroxide (KOH) in milligram that is required to neutralize one gram of the substance.

As described herein, the term primer coating may be used interchangeably with the term primer layer.

UV-curable primer coatings with high acid numbers, e.g acid values higher than 140 mg KOH/g, tend to exhibit poor water-resistance, and UV-curable primer coatings with low internal cohesion tend to exhibit poor ink receptivity in flexography because they are soft and malleable, such that the new print surface does not provide a stable, continuously smooth surface upon which to dispose coloured ink layers, especially under demanding relief printing conditions for which surface area contact between printing inks and print media is most critical. Further, when the surface of the UV-curable primer coating is unstable and discontinuous, inter-coat adhesion to subsequent coloured ink layers is also poor.

Primer layers are preferred to have an acid value of more than 50 mg KOH/g, preferably more than 55 mg KOH/g, even more preferably more than 60 mg KOH/g. Primer layers are preferred to have an acid value less than 140 mg KOH/g, preferably less than 139 mg KOH/g, more preferably less than 135 mg KOH, even more preferably less than 130 mg KOH/g, and most preferably equal or less than 120 mg KOH/g. Namely, in order to achieve a proper balance between ink attachment properties and ink detachment properties. In this way, one may improve recyclability without decreasing the functional use of the label.

### Component C3

An acid functional radiation curable monomer is added to the primer composition. Preferably carboxylated polyester acrylates are used. The acid functional radiation curable monomer(s) used are alkali strippable and are preferably added in an amount of at least 25 wt%, preferably at least 28 wt%, more preferably at least 30 wt%, even more preferably at least 32 wt%, and most preferably at least 35 wt%. Lower wt% ranges may cause insufficient ink removal upon washing with alkaline washing media. Preferably the functional radiation curable monomer is included into the composition in an amount of at most 65 wt%, preferably at most 60 wt%, more preferably at most 55 wt %. Higher wt % may affect the proper balance between the functional use and the de-ink ability by having hydrolysis reactions already occurring during the functional use of the label which may cause ink flow out. Preferably the acid functional monomer is present within a range of 30 - 50 wt %, it has been found that this range achieves a good steam resistance.

The weight percentages herein are expressed as " wt% " and are based on the total weight of the composition.

Common UV curable formulations are described in Leach, R.H. and Pierce, R.J., The Printing Ink Manual, 1991, 642; U.S. Pat. No. 9751337B2; and U.S. Pat. No. 10369837B2. Unsaturated polyesters can possess high molecular weights and high crosslink densities upon exposure to ultraviolet radiation, which can result in improved print surfaces for UV flexographic printing.

Monomeric and monomeric functional acrylates preferably have molecular weights of 10,000 g/mol or less, preferably less than 5,000 g/mol or less, more preferably between 20 - 1000 g/mol. A preferred radiation curable monomer or oligomers is a tricyclodecane dimethanol diacrylate which are available via Sartomer Arkema. It has been found that said component delivers toughness to the primer layer upon exposure to UV light. Preferably the monomeric acrylates are selected so that a combination of acrylate functionalities is made. Preferably so that the primer composition has monomeric acrylates having functionalities of 1 and/or 2 and/or 3 in combination with higher functionalities, such as functionalities of 4 and/or 5 and/or 6.

The inventors have found that addition of higher molecular weight species, such as cellulosic polymers, may enhance primer coating flexibility, substrate adhesion, and water resistance. Such primer coatings may be applied to flexible substrates, such as, for example, polyethylene terephthalate, glycol-modified polyethylene terephthalate, polyvinyl chloride, and the like. Such primer coatings may be useful when incorporated into articles, such as shrink sleeve labels, for example.

### Component C2

Cellulosic polymers are preferably polysaccharides or derivatives of polysaccharides, that may have degrees of polymerization of, for example, 100, 1000, 10,000, or more. Cellulosic polymers may have thermal properties such as, for example, glass transition temperatures (Tg) in the range of 75°C to 189°C as measured with DSC, and melting temperatures between 75°C and 260°C. Preferably the melting temperature is at least 110°C, more preferably between 120 - 150 °C wherein said melting temperature is measured by DSC. The cellulosic polymers include derivatives of cellulose such as, for example, esters and ethers of cellulose. Cellulosic esters include cellulose acetates, such as, for example, cellulose acetate, cellulose triacetate, cellulose propionate, cellulose acetate propionate, cellulose acetate butyrate (CAB), and the like. Cellulosic ethers include, for example, methylcellulose, ethylcellulose, ethyl methyl cellulose, hydroxyethyl cellulose, hydroxypropyl cellulose, hydroxyethyl methyl cellulose, hydroxypropyl methyl cellulose, hydroxypropyl ethyl cellulose, ethyl hydroxyethyl cellulose, carboxymethyl cellulose, and the like. . A preferred cellulosic polymer is cellulose acetate butyrate which is available as CAB-551-0.01, Eastman. The cellulosic polymer is preferably present in a range of 2 - 12 wt%, more preferably 4 - 10 wt%. In this way, one can surprisingly achieve both a good steam resistance and ink removal upon alkaline washing.

### Component P1

Radiation curing may be aided through use of photoinitiators, thermal initiators, and the like. These and other coating additives will be understood by those skilled in the art.

### Component C1 and component C4

Types of radiation curable monomers are known. These may include monomers with one or more acrylic or methacrylic groups, such as, for example, polyfunctional monomers with one, two, three, four, five, six, or more ethylenically unsaturated, polymerizable groups. The composition comprises, the photo initiator (p1), the cellulosic polymer (c2) , the acid-functional radiation curable monomer (c3), the multifunctional radiation curable monomer (c4) and one or more additional radiation curable monomers (c1) that are different from acid-functional radiation curable monomer (c3) and the multifunctional radiation curable monomer (c4).
In some cases, radiation curable monomers may be polymerized or crosslinked in the presence of light, such as, for example, ultraviolet light at wavelengths of, for example, about 246 nm or about 280 nm. The importance of maintaining low ink viscosities in flexographic printing is well known to those skilled in the art. Optimal viscosity of the primer solution measured at 384 s-1 shear rate and 25°C is preferably in a range between 50 - 1000 mPa.s, more preferably between 100 - 600 mPa.s.
By including difunctional or monofunctional radiation curable monomers (C1), one can maintain an optimal viscosity range thereby providing smooth and continuous print quality to the primer layer. The difunctional or monofunctional radiation curable monomer is preferably present in a range between 25 - 60 wt%, more preferably in a range between 35 - 50 wt%. Preferably, the difunctional or monofunctional radiation curable monomers have a mono or di acrylate functionality. Typically, the one or more of a monofunctional or difunctional radiation curable monomer (c1) have an acid value lower than 240 mg KOH/g.
Dipentaerythritol hexaacrylate (DPHA) is a preferred multifunctional radiation curable monomer having an acrylate functionally of six. By including multifunctional radiation curable monomers (C4), one can enhance the formation of a well cured network thereby providing a desired level of toughness to the primer layer. The multifunctional radiation curable monomer is preferably present in a range between 0,1 - 15 wt%, preferably between 0,5 - 12,5 wt%, more preferably between 1,5 - 10 wt%. By having the multifunctional radiation curable monomer withing these ranges, one can improve the steam resistance of the composition. Preferably the multifunctional radiation curable monomer is present within 4,5 - 9,5 wt %, in this way one may achieve high ink receptivity and high adhesion ratings.

In an embodiment, the composition comprises: 2-10 wt% cellulose acetate butyrate (CAB), 2-10 wt% dipentaerythritolhexaacrylate (DPHA), 25-60 wt% acid-functional acrylate, 5-15 wt% aromatic monoacrylate, 5-15 wt% tricyclodecanedimethanoldiacrylate (TCDDA), 5-20 wt% hexanedioldiacrylate (HDODA), 5-20 wt% dipropyleneglycoldiacrylate (DPGDA), 1-10 wt% cyclohexylphenyl ketone (CPK) and 1-10 wt% benzildimethyl ketal (BDK). The weight percentages (wt%) are based on the total weight of the composition.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims. The invention will now further be explained by the use of examples. It is to be understood that these examples are not intended to limit the scope.

### EXAMPLES

### Preparation of Mixes

A cellulose polymer intermediate blend was prepared in advance. To a room temperature mixing vessel was added 60.0 parts by weight dipropyleneglycoldiacrylate (DPGDA). To the intermediate was added 40.0 parts by weight cellulose acetate butyrate (CAB) with agitation. The intermediate blend continued to be stirred for 2-3 hours, which was sufficient time for no gel particles to be visible under a microscope at 200 power magnification using polarized light in transmission mode, for samples taken from the intermediate blend. To a clean vessel, 35.0 parts by weight of acid functional acrylate monomer, 15.0 parts by weight of hexanedioldiacrylate (HDODA), 10.0 parts by weight of tricyclodecanedimethanoldiacrylate (TCDDA) as C1, 10.0 parts by weight of aromatic monoacrylateas C3 , and 5.0 parts by weight of dipentaerythritolhexaacrylate (DPHA). The resulting mix was stirred for 15 minutes at 200-300 rpm. To this mix, 7.5 parts by weight of cyclohexylphenyl ketone (CPK) and 7.5 parts by weight of benzildimethyl ketal (BDK) as photoinitiator were added with stirring. The resulting mix was vigorously stirred for 30 minutes at 700-800 rpm, which was sufficient time for no crystal particles to be visible at 200 power magnification under polarized light source in transmission mode, for samples taken from the mix. To this mix, 10.0 parts of the cellulose polymer intermediate were added with stirring for 10 minutes at 200-300 rpm. The resulting primer coating mix was filtered prior to use.

### Preparation of Primer Coating Construction

50 µm crystallizable, glycol-modified polyethylene terephthalate (Smart Cycle PET-g, Klockner) film substrate was exposed to air plasma corona discharge treatment at 1.25 kW/cm2. The UV primer coating mix was applied onto the corona treated PET-g film via continuous-web flexography using a 600 LPI - 3.0 BCM anilox roll, and exposed to 246 nm and 280 nm ultraviolet radiation at 400 watts per inch Hg lamp intensity for 0.1-0.2 sec. The resulting primer coat weight was measured to be in the range of 2.0 - 4.0 g/m2. UV-flexo CMYK process color inks (EkoCure XS, Flint) were then applied, in succession, onto the primer-coated PET-g substrate via UV-flexography, at color densities of C=1.35, M=1.35, Y=1.00, and K=1.70, as measured by an X-Rite color spectrophotometer. High-opacity UV-flexo white ink (EkoCure XS, Flint) was then applied successively onto the printed film at 65-75 contrast ratio units, as measured by an X-Rite densitometer. The sample above was used as example 1.

### Primer Coating Evaluation

Print quality of the primer coating label construction was evaluated via reference standard comparison. The first flexo print station containing the primer coating was lifted away from contacting the moving web, and the remaining CMYK and white print stations were then applied directly onto the PET-g film substrate. This 'primer-free' print sample was used as a reference standard for print quality. Print quality of the primer coating construction then, was considered acceptable if color strength, dot-gain values, defect-frequency, CIE L*a*b* color-space values, and chromaticity were observed to be comparable to that of the reference standard. This primer coating construction achieved good print quality.

Adhesion of the primer coating construction to the PET-g substrate was evaluated according to ASTM 3359 Standard Test Method for Measuring Adhesion by Tape. Adhesive tape (#610 semi-transparent pressure-sensitive tape from 3M Company, St. Paul, Minnesota) was applied to the printed area and smoothed with a rubber roller until no air bubbles were observed between the tape and the printed film. The tape was then rapidly peeled off. The appearance of the coated film was given a score on a 1 to 5 scale: 5=0% ink removal; 4=minimal ink removal at less than or equal to 10%; 3=some ink removal at 11%-35%; 2=excessive ink removal at 36%-75%; 1=greater than 75% ink removal. This primer coating achieved an adhesion rating of 5 (no ink removal from the PET-g substrate).

Washability of the primer coating label construction was evaluated according to specific test conditions listed under APR (Association of Post-Consumer Plastics Recyclers) PET Screening Standard Test Methods: PET-S-01 Labels for PET Wash Water Evaluation; PET-S-02 Measurement of PET flake or Pellet Discoloration. 400 mL of 1.0% by weight NaOH alkaline aqueous wash solution was prepared in an 800 mL Pyrex beaker. The caustic wash solution was heated to 85°C while covered with a watch glass to minimize evaporation. 100 g of clean PET bottle flake (0.7 cm squares), and about 10 g of the printed PET-g label flake (0.7 cm squares) were added to the wash solution. A 3" diameter, three-pronged stainless steel propeller-type mixing blade on a ½" stainless steel shaft was positioned about ½" from the bottom of the beaker. The PET / PET-g flake slurry was stirred for about 15 minutes at 540 rpm and about 85°C. The PET / PET-g flake slurry was strained through 50 µm wire mesh, and the wash solution was saved for visual observation. The strained PET flake and PET-g label flake was rinsed through the strainer using about 200 mL deionized water, and then allowed to dry thoroughly. 100 g of PET bottle flake reference standard without the printed label were then produced according to this procedure. CIE L*a*b* color-space readings were taken for PET bottle flakes using an X-Rite spectrophotometer, and degree of wash water discoloration was evaluated visually. Both of these test results were noted. The inventors were primarily concerned with the 'de-inking' ability of the primer coating under standard APR PET flake wash conditions. The primer coating of example 1 achieved 100% ink removal from the PET-g film substrate under standard APR PET flake wash conditions, based on visual inspection.

Steam resistance of the cured primer coating was evaluated visually. The primer coating was exposed to a continuous stream of hot water vapor propelled by a Conair GS-54 handheld garment steamer from a distance of about 1-3 inches for about 30-40 seconds, and then allowed to dry for 20 minutes at room temperature. Steam resistance failure was defined as exhibiting any detectable level of blush within the primer layer (change in refractive index due to water absorption, creating a foggy appearance), as determined through visual observation, blush and other failures to steam is indicated as poor. This primer coating achieved no effect upon steam exposure for about 30-40 seconds from a distance of about 1-3 inches, no effect is indicated as good.

### Examples 2-10

Several additional primer coatings of varying composition were prepared and evaluated according to the procedures of Example 1. The resulting primer coat weights of the other samples were in the range of 2.0-4.0g/m2. Primer coatings made from mixes containing no CAB, and primer coatings made from mixes containing no DPHA had poor adhesion ratings of 1-2 and poor print quality compared to reference standard. Further, primer coatings made from mixes containing no CAB, and primer coatings made from mixes containing no DPHA displayed severe blushing defects (hazy appearance) upon prolonged exposure to steam. The compositions and measured properties are summarized in Table I.

**Table 1**

| **Primer coating recipe** | **Components in the composition** | | | | | | **Test results and evaluation** | | | | |
|---|---|---|---|---|---|---|---|---|---|---|---|
| | **C2** | **C4** | **C3** | **C1** | **C1** | **P1** | **Tape-off Ink Remo val** | **Adhes ion Ratin g** | **CM YK print quali ty** | **Caus tic wash ink remo val** | **Steam Resista nce** |
| | **CA B** | **DP HA** | **Acid functio nal mono mer** | **Di acryl ate** | **Mon o acryl ate** | **Photoiniti ator** | | | | | |
| **Reference Standard** | - | - | - | - | - | - | 0% | 5 | Good | 0% | Good |
| **Ex. 1** | 4 | 5 | 35 | 31 | 10 | 15 | 0% | 5 | Good | 100% | Good |
| **Ex. 2** | 0 | 0 | 60 | 15 | 10 | 15 | 100% | 1 | Poor | 100% | Poor |
| **Ex. 3** | 0 | 0 | 35 | 40 | 10 | 15 | 100% | 1 | Poor | 100% | Poor |
| **Ex. 4** | 0 | 0 | 25 | 50 | 10 | 15 | 50% | 2 | Poor | 75% | Poor |
| **Ex. 5** | 4 | 0 | 33 | 38 | 10 | 15 | 35% | 3 | Poor | 100% | Good |
| **Ex. 6** | 10 | 0 | 35 | 30 | 10 | 15 | 25% | 3 | Good | 100% | Good |
| **Ex. 7** | 0 | 4 | 35 | 36 | 10 | 15 | 35% | 3 | Poor | 100% | Good |
| **Ex. 8** | 0 | 10 | 35 | 30 | 10 | 15 | 25% | 3 | Good | 85% | Good |
| **Ex. 9** | 8 | 2 | 35 | 30 | 10 | 15 | 20% | 3 | Good | 100% | Good |
| **Ex. 10** | 2 | 8 | 35 | 30 | 10 | 15 | 10% | 4 | Good | 100% | Good |

The table shows several examples for a primer composition. The compositions made had an acid value between 50 - 135 mg KOH/g and included a cellulosic polymer (c2), an acid-functional radiation curable monomer (c3) and a multifunctional radiation curable monomer (c4). The composition also included, in addition to the acid-functional radiation curable monomer (c3) and (c4), additional radiation curable monomers (c1) that are different from said acid-functional radiation curable monomer (c3) and the multifunctional radiation curable monomer (c4).

The data of Table I shows that primer coatings comprising at least about 35.0 wt % of the cured radiation curable acid-functional acrylate monomer achieved 100% caustic wash ink removal, primer coatings comprising at least about 4.0 wt % of the cured radiation curable DPHA monomer achieved an adhesion rating of at least 3, primer coatings comprising at least about 4.0 wt % of the CAB polymer achieved an adhesion rating of at least 3, and that primer coatings comprising at least about 9.0 - 10.0 combined wt% of DPHA monomer and CAB polymer achieved good print quality.

The invention has been described in detail with respect to particular embodiments, but it will be understood that variations and modifications can be effected within the scope of the invention. The presently disclosed embodiments are therefore considered in all respects to be illustrative and not restrictive. The scope of the invention is indicated by the appended claims.

## Claims

1. A primer composition (C) for a flexographic printing label wherein said primer composition comprises at least the following components of which the wt% percentages are expressed as based on the total weight of the primer composition:
- one or more of a monofunctional or difunctional radiation curable monomer (c1) preferably present in the range of 25 - 60 wt% ;
- a photo initiator (p1) present in a range of 0 - 20 wt%;
**characterized in that**
the primer composition has an acid value of 50 - 135 mg KOH/g, more preferably 60 - 120 mg KOH/g and wherein
the primer composition further comprises:
- a cellulosic polymer (c2) present in a range of 2 - 12 wt%, more preferably 4 - 10 wt%,
- an acid-functional radiation curable monomer (c3) present in a range of 25 - 60 wt% and having an acid value of more than 240 mg KOH/g, preferably between 240 - 270 mg KOH/g,
- a multifunctional radiation curable monomer (c4) with an acrylate functionality of at least 3, preferably at least 4, more preferably at least 5, most preferably 6.

2. Primer composition according to claim 1, wherein at least one of the one or more radiation curable monomers (c1) has one or more of the following features:
- an average molecular weight at least 150 g/mol, in particular between 150 - 800 g/mol;
- an average acrylate functionality equal to n, wherein n = 1-2.

3. Primer composition according any of the previous claims, wherein the one or more radiation curable monomers (c1) have an acid value lower than 240 mg KOH/g.

4. Primer composition according any of the previous claims, wherein the multifunctional radiation curable monomer (c4) is selected from: dipentaerythritol hexaacrylate (DPHA), pentaerythritol triacrylate (PETIA), a mixture of tri- and tetra-acrylates with a high degree of acrylic unsaturation, or hexafunctional urethane acrylates; and/or wherein the multifunctional radiation curable monomer (c4) is present in a range between 0,1 - 15 wt%, preferably between 0,5 - 12,5 wt%, more preferably between 1,5 - 10 wt%.

5. Primer composition according to any of the previous claims, wherein the cellulosic polymer (c2) has a glass transition temperature between 80 - 90°C, wherein said glass transition temperature is measured by DSC; and/or wherein the cellulosic polymer (c2) has a melting temperature of at least 110°C, preferably between 120 - 150°C; wherein said melting temperature is measured by DSC; and/or wherein the cellulosic polymer (c2) has an average molecular weight (Mw) of at least 5,000g/mol, preferably between 10,000 - 20,000 g/mol; wherein said weight average molecular weight is measured by GPC / SEC equipped with an SLS detector; and/or wherein the cellulosic polymer (c2) comprises one or more derivatives of cellulose, preferably an ester derivative and/or an ether derivative thereof.

6. The primer composition according to any of the previous claims, wherein the ratio of the at least one cellulosic polymer (c2) to the at least one acid-functional radiation curable monomer (c3) is about 1:30 to about 1:6.

7. The primer composition according to any of the previous claims, wherein the acid-functional radiation curable monomer (c3) is a carboxylated polyester acrylate.

8. The primer composition according to any of the previous claims, wherein the photoinitiator (p1) is selected from the alpha-hydroxy ketone chemical family, such as Cyclohexylphenyl ketone (CPK) and benzildimethyl ketal (BDK).

9. A label (100) comprising at least the following layers:
- a substrate layer (SL1), preferably having a density which is higher than 1,00 g/cm³ such that the label sinks in water;
- a primer layer (PL2) comprising the primer composition according to any of the previous composition claims;
- optionally one or more ink layers (IL3)

10. The label according to the previous label claim, wherein the label has one or more of the following features:
- wherein the substrate layer (SL1) has a first surface and a second surface opposite of said first surface, and wherein the primer composition is applied as a primer layer on the second surface; wherein the label is a heat-shrink sleeve label designed to be sleeved around a package (P) and wherein the second surface is intended to be faced towards said package;
- wherein the substrate layer has a maximum heat shrinkage value of about 60 - 80%;
- wherein the substrate layer (SL1) has an average thickness of about 25-75 µm;
- wherein the substrate layer (SL1) is a glycol-modified polyethylene terephthalate (PET-g) film.

11. A method for producing a printing label, preferably a flexographic printing label, comprising the steps of:
- optionally, pre-treating the substrate, preferably by air plasma corona discharge treatment;
- applying the primer composition according to any of the previous composition claims on the substrate layer (SL1) such that a primer layer (PL2) is formed thereon;
- optionally applying one or more ink layers (IL3) on the primer layer.

12. The method according to the previous claim, further comprising the step of:
- at least partially curing the primer layer such that the primer layer (PL2) attaches to the substrate layer (SL1); and/or
- at least partially curing the primer layer with a first light source (LS1), before the one or more ink layers are applied;
- optionally curing the one or more ink layers with a second light source (LS2).

13. The method according to any of the previous method claims, wherein the applying of the primer composition is done such that at least 1 g/m², preferably at least 1,5 g/m², more preferably at least 2 g/m² of primer composition is applied on the substrate layer to form the primer layer thereon; and/or
wherein the applying of the primer composition is done such that less than 6 g/m², preferably less than 5 g/m², more preferably equal or less than 4 g/m² of primer composition is applied on the substrate layer to form the primer layer thereon; and/or
wherein the primer composition is applied on the substrate layer (SL1) via continuous-web flexography; and/or wherein the substrate layer (SL1) has a first and second surface, wherein the primer composition is applied on the second surface of the substrate layer and wherein the one or more ink layers are applied on the primer layer.

14. The method according to any of the previous method claims, wherein the second surface of the substrate layer (SL1) is pre-treated by means of corona treatment such that said second surface has a wetting tension of about 42 to 48 dynes/cm.

15. The method according to any of the previous method claims, wherein the primer layer is exposed to standard UV Hg vapor H-bulb at 1600 - 2100 mW/cm2 lamp intensity such that the primer layer achieves an adhesion rating of 3 or more, preferably 4 or more, even more preferably 5; when the primer layer is exposed for 0.06 - 0.10 sec ; wherein the adhesion rating is measured according to ASTM 3359.

## Patentansprüche

1. Grundierungszusammensetzung (C) für ein Flexodrucketikett, wobei die Grundierungszusammensetzung mindestens die folgenden Komponenten umfasst, deren Gew.-%-Sätze basierend auf dem Gesamtgewicht der Grundierungszusammensetzung ausgedrückt sind:
- ein oder mehrere monofunktionelle oder difunktionelle strahlungshärtbare Monomere (c1), die vorzugsweise in dem Bereich von 25-60 Gew.-% vorhanden sind;
- einen Photoinitiator (p1), der in einem Bereich von 0-20 Gew.-% vorhanden ist;
**dadurch gekennzeichnet, dass**
die Grundierungszusammensetzung einen Säurewert von 50-135 mg KOH/g, mehr bevorzugt 60-120 mg KOH/g aufweist und wobei
die Grundierungszusammensetzung ferner umfasst:
- ein Cellulosepolymer (c2), das in einem Bereich von 2-12 Gew.-%, mehr bevorzugt 4-10 Gew.-% vorhanden ist,
- ein säurefunktionelles, strahlungshärtbares Monomer (c3), das in einem Bereich von 25-60 Gew.-% vorhanden ist und einen Säurewert von mehr als 240 mg KOH/g, vorzugsweise zwischen 240-270 mg KOH/g, aufweist,
- ein multifunktionelles strahlungshärtbares Monomer (c4) mit einer Acrylatfunktionalität von mindestens 3, vorzugsweise mindestens 4, mehr bevorzugt mindestens 5, am meisten bevorzugt 6.

2. Grundierungszusammensetzung nach Anspruch 1, wobei mindestens eines des einen oder der mehreren strahlungshärtbaren Monomere (c1) eines oder mehrere der folgenden Merkmale aufweist:
- ein durchschnittliches Molekulargewicht von mindestens 150 g/mol, insbesondere zwischen 150-800 g/mol;
- eine durchschnittliche Acrylatfunktionalität gleich n, wobei n = 1-2.

3. Grundierungszusammensetzung nach einem der vorstehenden Ansprüche, wobei das eine oder die mehreren strahlungshärtbaren Monomere (c1) einen Säurewert von weniger als 240 mg KOH/g aufweisen.

4. Grundierungszusammensetzung nach einem der vorstehenden Ansprüche, wobei das multifunktionelle, strahlungshärtbare Monomer (c4) ausgewählt ist aus: Dipentaerythrithexaacrylat (DPHA), Pentaerythrittriacrylat (PETIA), einer Mischung aus Tri- und Tetraacrylaten mit einem hohen Grad an Acryl-Ungesättigtheit oder hexafunktionellen Urethanacrylaten; und/oder wobei das multifunktionelle, strahlungshärtbare Monomer (c4) in einem Bereich zwischen 0,1-15 Gew.-%, vorzugsweise zwischen 0,5-12,5 Gew.-%, mehr bevorzugt zwischen 1,5-10 Gew.-% vorhanden ist.

5. Grundierungszusammensetzung nach einem der vorstehenden Ansprüche, wobei das Cellulosepolymer (c2) eine Glasübergangstemperatur zwischen 80 und 90 °C aufweist, wobei die Glasübergangstemperatur durch DSC gemessen wird; und/oder wobei das Cellulosepolymer (c2) eine Schmelztemperatur von mindestens 110 °C, vorzugsweise zwischen 120-150 °C, aufweist; wobei die Schmelztemperatur durch DSC gemessen wird; und/oder wobei das Cellulosepolymer (c2) ein durchschnittliches Molekulargewicht (Mw) von mindestens 5.000 g/mol, vorzugsweise zwischen 10.000-20.000 g/mol aufweist; wobei das gewichtsdurchschnittliche Molekulargewicht durch GPC / SEC gemessen wird, ausgestattet mit einem SLS-Detektor; und/oder wobei das Cellulosepolymer (c2) ein oder mehrere Derivate von Cellulose umfasst, vorzugsweise ein Esterderivat und/oder ein Etherderivat davon.

6. Grundierungszusammensetzung nach einem der vorstehenden Ansprüche, wobei das Verhältnis des mindestens einen Cellulosepolymers (c2) zu dem mindestens einen säurefunktionellen, strahlungshärtbaren Monomer (c3) etwa 1 : 30 bis etwa 1 : 6 beträgt.

7. Grundierungszusammensetzung nach einem der vorstehenden Ansprüche, wobei das säurefunktionelle, strahlungshärtbare Monomer (c3) ein carboxyliertes Polyesteracrylat ist.

8. Grundierungszusammensetzung nach einem der vorstehenden Ansprüche, wobei der Photoinitiator (p1) aus der chemischen Familie der Alpha-Hydroxyketone ausgewählt ist, wie Cyclohexylphenylketon (CPK) und Benzildimethylketal (BDK).

9. Etikett (100), umfassend mindestens die folgenden Schichten:
- eine Substratschicht (SL1), die vorzugsweise eine Dichte aufweist, die derart höher als 1,00 g/cm³ ist, dass das Etikett in Wasser versinkt;
- eine Grundierungsschicht (PL2), umfassend die Grundierungszusammensetzung nach einem der vorstehenden Zusammensetzungsansprüche;
- optional eine oder mehrere Tintenschichten (IL3)

10. Etikett nach dem vorstehenden Etikettenanspruch, wobei das Etikett eines oder mehrere der folgenden Merkmale aufweist:
- wobei die Substratschicht (SL1) eine erste Oberfläche und eine der ersten Oberfläche gegenüberliegende zweite Oberfläche aufweist und wobei die Grundierungszusammensetzung als eine Grundierungsschicht auf die zweite Oberfläche aufgetragen ist; wobei das Etikett ein Schrumpfschlauchetikett ist, das ausgelegt ist, um um eine Verpackung (P) herum gewickelt zu werden, und wobei die zweite Oberfläche ausgelegt ist, um der Verpackung zugewandt zu sein;
- wobei die Substratschicht einen maximalen Wärmeschrumpfwert von etwa 60-80 % aufweist;
- wobei die Substratschicht (SL1) eine durchschnittliche Dicke von etwa 25-75 µm aufweist;
- wobei die Substratschicht (SL1) eine glykolmodifizierte Polyethylenterephthalatfolie (PET-g-Folie) ist.

11. Verfahren zum Herstellen eines Drucketiketts, vorzugsweise eines Flexodrucketiketts, umfassend die Schritte:
- optional Vorbehandeln des Substrats, vorzugsweise durch eine Luftplasma-Koronaentladungsbehandlung;
- derartiges Aufbringen der Grundierungszusammensetzung nach einem der vorstehenden Zusammensetzungsansprüche auf die Substratschicht (SL1), dass eine Grundierungsschicht (PL2) darauf ausgebildet wird;
- optionales Aufbringen einer oder mehrerer Tintenschichten (IL3) auf die Grundierungsschicht.

12. Verfahren nach dem vorstehenden Anspruch, ferner umfassend den Schritt:
- mindestens teilweises derartiges Aushärten der Grundierungsschicht, dass sich die Grundierungsschicht (PL2) an der Substratschicht (SL1) anlagert; und/oder
- mindestens teilweises Aushärten der Grundierungsschicht mit einer ersten Lichtquelle (LS1), bevor die eine oder die mehreren Tintenschichten aufgetragen werden;
- optionales Aushärten der einen oder der mehreren Tintenschichten mit einer zweiten Lichtquelle (LS2).

13. Verfahren nach einem der vorstehenden Verfahrensansprüche, wobei das Auftragen der Grundierungszusammensetzung derart erfolgt, dass mindestens 1 g/m², vorzugsweise mindestens 1,5 g/m², mehr bevorzugt mindestens 2 g/m² der Grundierungszusammensetzung auf die Substratschicht aufgetragen wird, um die Grundierungsschicht darauf auszubilden; und/oder
wobei das Auftragen der Grundierungszusammensetzung derart erfolgt, dass weniger als 6 g/m², vorzugsweise weniger als 5 g/m², mehr bevorzugt gleich oder weniger als 4 g/m² der Grundierungszusammensetzung auf die Substratschicht aufgetragen wird, um die Grundierungsschicht darauf auszubilden; und/oder
wobei die Grundierungszusammensetzung mittels Endlos-Flexodruck auf die Substratschicht (SL1) aufgetragen wird; und/oder wobei die Substratschicht (SL1) eine erste und eine zweite Oberfläche aufweist, wobei die Grundierungszusammensetzung auf die zweite Oberfläche der Substratschicht aufgetragen ist und wobei die eine oder die mehreren Tintenschichten auf die Grundierungsschicht aufgetragen sind.

14. Verfahren nach einem der vorstehenden Verfahrensansprüche, wobei die zweite Oberfläche der Substratschicht (SL1) mittels einer Koronabehandlung derart vorbehandelt wird, dass die zweite Oberfläche eine Benetzungsspannung von etwa 42 bis 48 Dyn/cm aufweist.

15. Verfahren nach einem der vorstehenden Verfahrensansprüche, wobei die Grundierungsschicht einer standardmäßigen UV-Hg-Dampf-H-Lampe bei einer Lampenintensität von 1600-2100 mW/cm2 derart ausgesetzt wird, dass die Grundierungsschicht eine Haftungsbewertung von 3 oder mehr, vorzugsweise 4 oder mehr, noch mehr bevorzugt 5 erreicht; wenn die Grundierungsschicht 0,06 bis 0,10 Sekunden lang ausgesetzt wird; wobei die Haftungsbewertung gemäß ASTM 3359 gemessen wird.

## Revendications

1. Composition d'apprêt (C) pour une étiquette d'impression flexographique dans laquelle ladite composition d'apprêt comprend au moins les composants suivants dont les pourcentages en poids sont exprimés par rapport au poids total de la composition d'apprêt :
- un ou plusieurs monomères monofonctionnels ou difonctionnels durcissables par irradiation (c1), de préférence présents dans la plage de 25 à 60 % en poids ;
- un photo-initiateur (p1) présent dans une plage de 0 à 20 % en poids ;
**caractérisée en ce que**
la composition d'apprêt a un indice d'acidité compris entre 50 et 135 mg KOH/g, de préférence entre 60 et 120 mg KOH/g, et dans laquelle
la composition d'apprêt comprend en outre :
- un polymère cellulosique (c2) présent dans une plage de 2 à 12 % en poids, plus préférablement de 4 à 10 % en poids,
- un monomère durcissable par irradiation à fonction acide (c3) présent dans une plage de 25 à 60 % en poids et ayant un indice d'acidité supérieur à 240 mg KOH/g, de préférence entre 240 et 270 mg KOH/g,
- un monomère multifonctionnel durcissable par irradiation (c4) avec une fonctionnalité acrylate d'au moins 3, de préférence d'au moins 4, plus préférablement d'au moins 5, idéalement de 6.

2. Composition d'apprêt selon la revendication 1, dans laquelle au moins un du ou des monomères durcissables par irradiation (c1) présente une ou plusieurs des caractéristiques suivantes :
- une masse moléculaire moyenne d'au moins 150 g/mol, en particulier entre 150 et 800 g/mol ;
- une fonctionnalité acrylate moyenne égale à n, où n = 1-2.

3. Composition d'apprêt selon l'une quelconque des revendications précédentes, dans laquelle le ou les plusieurs monomères durcissables par irradiation (c1) ont un indice d'acidité inférieur à 240 mg KOH/g.

4. Composition d'apprêt selon l'une quelconque des revendications précédentes, dans laquelle le monomère multifonctionnel durcissable par irradiation (c4) est choisi parmi : hexaacrylate de dipentaérythritol (DPHA), triacrylate de pentaérythritol (PETIA), mélange de tri- et tétra-acrylates à haut degré d'insaturation acrylique, ou acrylates d'uréthane hexafonctionnels ; et/ou dans laquelle le monomère multifonctionnel durcissable par irradiation (c4) est présent dans une plage comprise entre 0,1 et 15 % en poids, de préférence entre 0,5 et 12,5 % en poids, plus préférablement entre 1,5 et 10 % en poids.

5. Composition d'apprêt selon l'une quelconque des revendications précédentes, dans laquelle le polymère cellulosique (c2) a une température de transition vitreuse comprise entre 80 et 90 °C, ladite température de transition vitreuse étant mesurée par DSC ; et/ou dans laquelle le polymère cellulosique (c2) a une température de fusion d'au moins 110 °C, de préférence entre 120 et 150 °C ; dans laquelle la température de fusion est mesurée par DSC ; et/ou dans laquelle le polymère cellulosique (c2) a une masse moléculaire moyenne (Mw) d'au moins 5 000 g/mol, de préférence entre 10 000 et 20 000 g/mol ; dans laquelle la masse moléculaire moyenne en poids est mesurée par GPC / SEC équipé d'un détecteur SLS ; et/ou dans laquelle le polymère cellulosique (c2) comprend un ou plusieurs dérivés de la cellulose, de préférence un dérivé ester et/ou un dérivé éther de celle-ci.

6. Composition d'apprêt selon l'une quelconque des revendications précédentes, dans laquelle le rapport entre l'au moins un polymère cellulosique (c2) et l'au moins un monomère durcissable par irradiation à fonction acide (c3) est d'environ 1:30 à environ 1:6.

7. Composition d'apprêt selon l'une quelconque des revendications précédentes, dans laquelle le monomère durcissable par irradiation à fonction acide (c3) est un polyester acrylate carboxylé.

8. Composition d'apprêt selon l'une quelconque des revendications précédentes, dans laquelle le photo-initiateur (p1) est choisi parmi la famille chimique des alpha-hydroxy-cétones, telles que la Cyclohexylphényl-cétone (CPK) et le benzildiméthyl-cétal (BDK).

9. Étiquette (100) comprenant au moins les couches suivantes :
- une couche de substrat (SL1), ayant de préférence une densité supérieure à 1,00 g/cm³, de telle sorte que l'étiquette soit immergée dans l'eau ;
- une couche d'apprêt (PL2) comprenant la composition d'apprêt selon l'une quelconque des revendications de composition précédentes ;
- éventuellement une ou plusieurs couches d'encre (IL3)

10. Étiquette selon la revendication d'étiquette précédente, dans laquelle l'étiquette présente une ou plusieurs des caractéristiques suivantes :
- dans laquelle la couche de substrat (SL1) présente une première surface et une seconde surface opposée à la première, et dans laquelle la composition d'apprêt est appliquée en tant que couche d'apprêt sur la seconde surface ; dans laquelle l'étiquette est une étiquette manchon thermorétractable conçue pour être enroulée autour d'un emballage (P) et dans laquelle la seconde surface est destinée à être orientée vers ledit emballage ;
- dans laquelle la couche de substrat a une valeur maximale de rétrécissement à la chaleur d'environ 60 à 80 % ;
- dans laquelle la couche de substrat (SL1) a une épaisseur moyenne d'environ 25-75 µm ;
- dans laquelle la couche de substrat (SL1) est un film de polyéthylène téréphtalate modifié par le glycol (PET-g).

11. Procédé de production d'une étiquette d'impression, de préférence une étiquette d'impression flexographique, comprenant les étapes consistant à :
- éventuellement, prétraiter le substrat, de préférence par un traitement de décharge corona au plasma d'air ;
- appliquer la composition d'apprêt selon l'une quelconque des revendications précédentes sur la couche de substrat (SL1) de telle sorte qu'une une couche d'apprêt (PL2) soit formée sur celle-ci ;
- appliquer éventuellement une ou plusieurs couches d'encre (IL3) sur la couche d'apprêt.

12. Procédé selon la revendication précédente, comprenant en outre les étapes consistant à :
- durcir au moins partiellement la couche d'apprêt de telle sorte que la couche d'apprêt (PL2) adhère à la couche de substrat (SL1) ; et/ou
- durcir au moins partiellement la couche d'apprêt à l'aide d'une première source lumineuse (LS1), avant l'application de la ou des plusieurs couches d'encre :
- éventuellement, durcir la ou les couches d'encre à l'aide d'une seconde source lumineuse (LS2).

13. Procédé selon l'une quelconque des revendications précédentes, dans lequel l'application de la composition d'apprêt est effectuée de telle sorte qu'au moins 1 g/m2, de préférence au moins 1,5 g/m², plus préférablement au moins 2 g/m² de composition d'apprêt soient appliqués sur la couche de substrat pour former la couche d'apprêt sur celle-ci ; et/ou
dans lequel l'application de la composition d'apprêt est effectuée de telle sorte que moins de 6 g/m², de préférence moins de 5 g/m², plus préférablement 4 g/m² ou moins de composition d'apprêt soit appliquée sur la couche de substrat pour former la couche d'apprêt sur celle-ci ; et/ou
dans lequel la composition d'apprêt est appliquée sur la couche de substrat (SL1) par flexographie à bande continue ; et/ou dans lequel la couche de substrat (SL1) a une première et une seconde surfaces, dans lequel la composition d'apprêt est appliquée sur la seconde surface de la couche de substrat et dans laquelle une ou plusieurs couches d'encre sont appliquées sur la couche d'apprêt.

14. Procédé selon l'une quelconque des revendications précédentes, dans lequel la seconde surface de la couche de substrat (SL1) est prétraitée au moyen d'un traitement corona de telle sorte que ladite seconde surface présente une tension de mouillage d'environ 42 à 48 dynes/cm.

15. Procédé selon l'une quelconque des revendications précédentes, dans lequel la couche d'apprêt est exposée à une lampe H à vapeur de Hg UV standard à une intensité de 1600 - 2 100 mW/cm2 de telle sorte que la couche d'apprêt atteigne un taux d'adhésion de 3 ou plus, de préférence de 4 ou plus, et encore plus préférablement de 5 ; lorsque la couche d'apprêt est exposée pendant 0,06 à 0,10 seconde ; dans lequel l'indice d'adhérence est mesuré conformément à la norme ASTM 3359.
